# EUROPÄISCHE PATENTSCHRIFT

(11) **EP 2 049 376 B1**
(45) Veröffentlichungstag und Bekanntmachung des Hinweises auf die Patenterteilung: **05.01.2011**
(21) Anmeldenummer: 07725959.6
(22) Anmeldetag: 12.06.2007
(51) Int. Cl.: B60T 17/00, G01N 27/22, G01N 1/22

(54) **DRUCKLUFTVERSORGUNGSEINRICHTUNG FÜR KRAFTFAHRZEUGE**
COMPRESSED AIR SUPPLY SYSTEM FOR MOTOR VEHICLES
DISPOSITIF D'ALIMENTATION EN AIR COMPRIMÉ POUR VÉHICULES AUTOMOBILES

(30) Priorität: 01.08.2006 DE 102006035772
(43) Veröffentlichungstag der Anmeldung: 22.04.2009
(73) Patentinhaber: WABCO GmbH, 30453 Hannover (DE)
(72) Erfinder: DIEKMEYER, Heinrich, 30890 Barsinghausen (DE); HEINRICH, Horst, 30455 Hannover (DE); STRILKA, Bernd, 30459 Hannover (DE)
(86) Internationale Anmeldenummer: PCT/EP2007/005146
(87) Internationale Veröffentlichungsnummer: WO 2008/014843

(56) Entgegenhaltungen:
- EP-A- 0 191 151
- EP-A- 0 717 282
- DE-A1- 3 504 884
- DE-A1- 3 724 149
- DE-B3-102004 026 624
- JP-A- 2003 193 830
- US-A- 4 131 011

## Beschreibung

Die Erfindung betrifft eine Druckluftversorgungseinrichtung für Kraftfahrzeuge mit einem Kompressor, einer Steuerelektronik, einem Lufttrockner, der einen Einlasskanal für ungetrocknete Druckluft, einen Auslasskanal für die getrocknete Druckluft und eine von der zu trocknenden Druckluft durchströmbare Entfeuchtungseinrichtung aufweist, einem Druckregler mit Auslassventil zur Steuerung des Kompressors zwischen einer Leerlaufphase und einer Lastlaufphase, einem Mehrkreisschutzventil, das über eine Druckluftleitung mit dem Auslasskanal des Lufttrockners verbunden ist und Überströmventile für die einzelnen Kreise aufweist, einem Regenerationsventil und einem Feuchtesensor zur Erfassung der Luftfeuchtigkeit gemäß Oberbegriff des Anspruchs 1. Eine solche Druckluftversorgungseinrichtung ist beispielsweise aus der DE 35 04 884 A1 bekannt.

Es ist bekannt, in Druckluftversorgungseinrichtungen von Kraftfahrzeugen die Luftfeuchtigkeit am Ausgang des Lufttrockners oder in einem Druckluftbehälter mit Hilfe eines als Feuchteschalter ausgebildeten Feuchtesensors zu messen, dessen Ausgangssignale einer Auswerte/Steuerelektronik zugeführt werden, die bei einen Schwellwert überschreitender Luftfeuchte ein Regenerieren der Entfeuchtungseinrichtung veranlasst oder ein Warnsignal erzeugt zur Anzeige, dass z.B. der Wirkungsgrad der Entfeuchtungseinrichtung stark vermindert ist und/oder ausgetauscht werden muss. Als eine Weiterbildung des Feuchteschalters werden unter anderem auch kapazitive Feuchtesensoren eingesetzt, bei denen z.B. eine hygroskopische Polymerschicht als Dielektrikum zwischen zwei Kondensator-Elektroden angeordnet ist. Entsprechend dem Wasserdampfdruck der Umgebung wird mehr oder weniger Wasser in der Polymerschicht eingelagert. Dadurch ändert sich die Dielektrizitätskonstante und damit die Kapazität des Kondensators. Die Druckluft in Nutzfahrzeugen ist bekanntlich verunreinigt mit unterschiedlichen zum Teil für die Polymerschicht schädlichen Bestandteilen der Ansaugluft sowie schädlichen Öl- und Ölzerfallsprodukten aus dem Verdichtungsprozess des Kompressors. Die Wirksamkeit des oben genannten kapazitiven Prinzips wird hierdurch bei längerer Einwirkzeit mit solchen Schadstoffen stark beeinträchtigt, wodurch insbesondere die Genauigkeit und die Lebensdauer des Feuchtesensors verringert wird.

Die Aufgabe der vorliegenden Erfindung besteht darin, eine Druckluftversorgungseinrichtung der eingangs genannten Art so auszubilden, dass die schädliche Einwirkung von Schadstoffen auf die, das Dielektrikum bildende Polymerschicht des Feuchtesensors wesentlich verringert ist und eine Beeinflussung der Feuchtemessung hinsichtlich Genauigkeit und Lebensdauer durch schädliche Beimengungen und Bestandteile der Druckluft weitestgehend vermieden wird.

Diese Aufgabe wird durch die Erfindung gemäß Anspruch 1 gelöst.

Vorteilhafte und zweckmäßige Weiterbildungen der Aufgabenlösung sind in den Unteransprüchen angegeben.

In der Messtechnik ist man normalerweise bemüht, so nah wie möglich mit der Messgröße in Berührung zu kommen. Die vorliegende Erfindung schlägt dagegen vor, sich gezielt vom eigentlichen Messmedium zu entfernen, um die eingeschränkte Medienverträglichkeit der hygroskopischen Polymerschicht zu kompensieren und die Messung der relativen Feuchte in einem Bypasskanal der Druckluftleitung durchzuführen. Der Bypass-kanal ist dabei gegenüber der eigentlichen Druckluftleitung im Querschnitt und Volumenstrom entsprechend vermindert.

Durch den Bypasskanal findet eine Parallelströmung an getrockneter Druckluft statt, wobei der Anteil der Druckluft der durch den Bypasskanal strömt, feuchtemäßig über den gleichen Zustand verfügt, wie der direkt zum Auslassanschluss strömende Hauptanteil der entfeuchteten Druckluft. Gleichzeitig wird aber die Menge an Schadstoffen, die den Feuchtesensor anströmt, entsprechend verringert, wodurch die schädlichen Einwirkungen auf die feuchteempfindliche Polymerschicht erheblich reduziert werden. Durch die Reduzierung der Einwirkung kontaminierender, d. h. schädlicher Wirkstoffe auf die kapazitätsbestimmende Polymerschicht, bleibt die kalibrierte Genauigkeit des Feuchtesensors über einen längeren Zeitraum erhalten und wird dadurch insgesamt die Lebensdauer des Feuchtesensors verlängert. Die erfindungsgemäße Ausbildung optimiert daher die Überwachung der Funktion des Lufttrockners zu Diagnose- und Steuerungszwecken, bspw. für die Regeneration und den gezielten Austausch der Entfeuchtungseinrichtung (Trocknerkartusche).

Die Messung der relativen Feuchte der getrockneten Druckluft in einem Bypasskanal kann sowohl unmittelbar nach dem Lufttrocknerauslass und vor dem Mehrkreisschutzventil, als auch in einem Verbraucherkreis des Mehrkreisschutzventiles erfolgen.

Um die Reaktionszeit des Feuchtesensors zu verbessern, ist der Bypasskanal gemäß einer Weiterbildung der Erfindung so ausgebildet, dass im Bypasskanal eine turbulente Strömung auftritt.

Vorzugsweise wird der Feuchtesensor senkrecht oberhalb des Druckluftkanals eingebaut, wodurch für Feuchte-Sensorelemente mit freien Drahtenden eine Verbesserung der Vibrationsbeständigkeit erreicht wird.

Die Erfindung sieht vor, die Feuchtesensor-Aufnahme über einen Kanal mit der Druckluftleitung zu verbinden, um so überschüssiger (kondensierter) Feuchtigkeit und auch Verunreinigungen die Möglichkeit zu geben, in den Druckluftkanal abzufließen.

Die Erfindung soll nachfolgend anhand der beigefügten Zeichnung näher erläutert werden.

Es zeigt:
- Fig. 1: eine herkömmliche Druckluftversorgungseinrich- tung mit einem Feuchtesensor und
- Fig. 2: eine erfindungsgemäße Einrichtung zur Feuchte- messung in schematischer Darstellung.

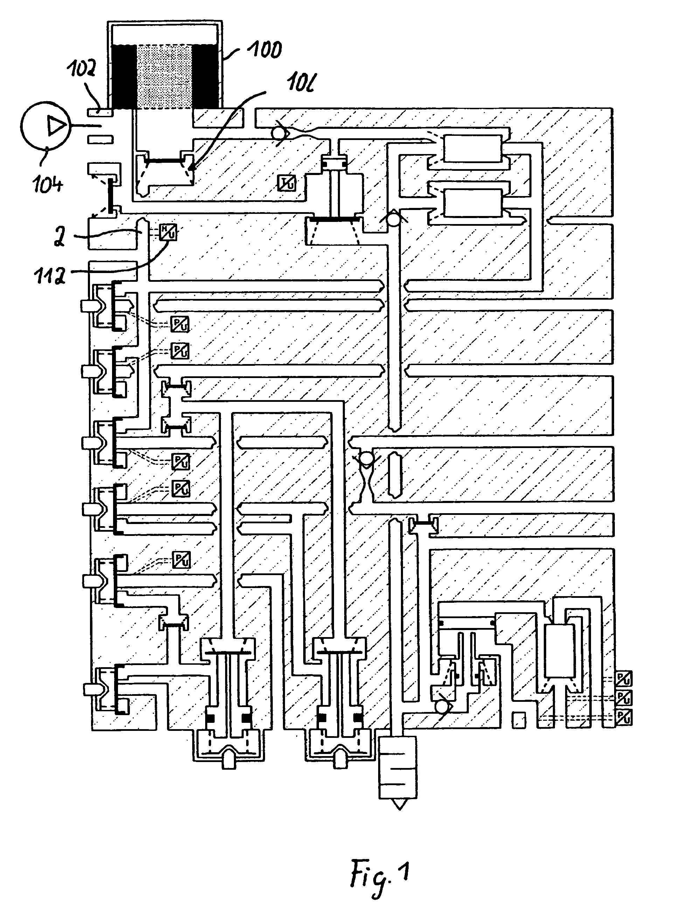

Die Zeichnung zeigt in der Figur 1 eine Druckluftversorgungseinrichtung für Kraftfahrzeuge mit einem Drucklufttrockner 100, dem über einen Anschluss 102 Druckluft von einem Kompressor 104 zugeführt wird. Die Druckluft durchströmt den Drucklufttrockner 100 und strömt dann weiter über ein Rückschlagventil 106 und eine Druckluftleitung 2 zu einem Mehrkreisschutzventil 110, das nicht Gegenstand der vorherigen Anmeldung ist und daher nicht näher erläutert werden soll.

In der zum Mehrkreisschutzventil führenden Druckleitung 2 ist ein Feuchtesensor 112 angeordnet.

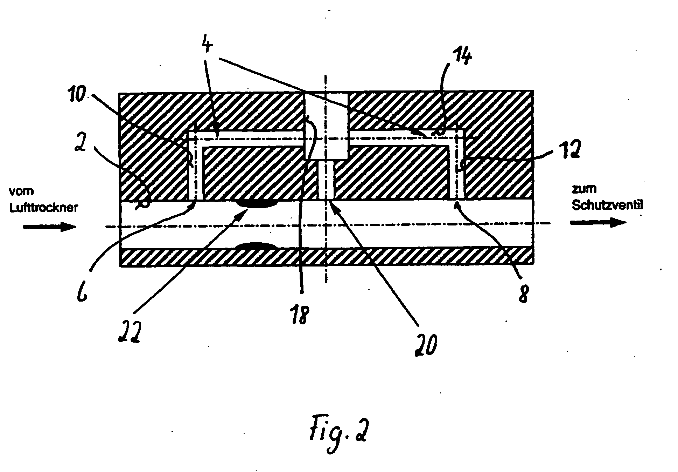

Erfindungsgemäß ist vorgesehen, die Feuchtemessung mittels des Feuchtesensors 112 nicht unmittelbar in der Druckluftleitung 2 ausgangsseitig des Drucklufttrockners 100 vorzusehen, sondern in einem Bypass-Kanal 4 der Druckleitung 2, wie dies näher in der Figur 2 dargestellt ist. Der Bypass-Kanal 4 ist also vorgesehen zwischen dem Ausgang des Drucklufttrockners 100 und dem Mehrkreisschutzventil 110.

Der Bypass-Kanal 4 weist einen Bypass-Einlass 6 und einen Bypass-Auslass 8 auf. Der Bypasskanal 4 ist vorzugsweise, wie dargestellt, U-förmig ausgebildet mit einem senkrecht von der Druckleitung 2 abzweigenden Bypass-Einlasskanal 10 und einem senkrecht in die Druckleitung 2 einmündenden Bypass-Auslasskanal 12 und mit einem parallel zur Druckleitung 2 verlaufenden, den Bypass-Einlasskanal 10 mit dem Bypass-Auslasskanal 12 verbindenden Verbindungskanal 14. Der Verbindungskanal 14 steht mit einer durch eine Ausnehmung 18 gebildeten Aufnahme für einen Feuchtesensor (nicht dargestellt) in Verbindung. Die Ausnehmung 18 erstreckt sich im Wesentlichen senkrecht nach unten über den Verbindungskanal 14 hinaus und steht über einen als Kondensatablauf dienenden Ablaufkanal 20 mit der Druckleitung 2 in Verbindung. Über diesen Ablaufkanal werden auch Verunreinigungen, z. B. Ölanteile, wieder in die Druckleitung 2 abgeführt.

Der Bypasskanal 4 und die Aufnahme 18 für den Feuchtesensor können im Luftrockner, im Mehrkreisschutzventil oder auch in einem separaten in die Druckleitung 2 einsetzbaren Bauteil ausgebildet sein. Die Aufnahme 18 ist vorzugsweise von außen zugänglich.

In der Feuchtesensor-Aufnahme 18 kann zusätzlich oder im Verbund mit dem Feuchtesensor ein Heizelement (nicht dargestellt) zur Regenerierung und Nachjustierung des Feuchtesensors angeordnet sein.

Vorteilhafterweise kann in der Druckluftleitung 2 zwischen dem Bypass-Einlass 6 und dem Bypass-Auslass 8 eine Leitungsverengung 22 (Blende) ausgebildet sein zur Erzeugung eines Staudrucks, wodurch eine Zwangsführung von Druckluft in den Bypasskanal 4 erzielt wird.

In dem zum Feuchtesensor führenden Teil des Bypasskanals 4 kann eine Einrichtung zum Abfiltern von Verunreinigungen (nicht dargestellt) angeordnet sein, wodurch eine weitere Reduzierung des Vordringens schädlicher Substanzen zum Feuchtesensor erreicht wird.

Der Bypasskanal 4 ist vorzugsweise so ausgebildet, dass die in den Bypasskanal 4 strömende Teilmenge der Druckluft den Bypasskanal turbulent durchströmt, wodurch eine Verbesserung der Reaktionszeit des Feuchtesensors erzielt wird.

Der Feuchtesensor wird vorzugsweise senkrecht eingebaut, wodurch für Feuchte-Sensorelemente mit freien Drahtenden eine Verbesserung der Vibrationsbeständigkeit erzielt wird.

## Patentansprüche

1. Druckluftversorgungseinrichtung für Kraftfahrzeuge mit einem Kompressor, einer Steuerelektronik,
einem Lufttrockner, der einen Einlasskanal für ungetrocknete Druckluft, einen Auslasskanal für die getrocknete Druckluft und eine von der zu trocknenden Druckluft durchströmbare Entfeuchtungseinrichtung aufweist
einem Druckregler mit Auslassventil zur Steuerung des Kompressors zwischen einer Leerlaufphase und einer Lastlaufphase,
einem Mehrkreissschutzventil, das über eine Druckluftleitung mit dem Auslasskanal des Lufttrockners verbunden ist und Überströmventile für die einzelnen Kreise aufweist,
einem Regenerationsventil und
einem Feuchtesensor zur Erfassung der Luftfeuchtigkeit der in der Druckluftleitung strömenden Druckluft,
**dadurch gekennzeichnet, dass**
der Feuchtesensor in einem Bypasskanal (4) der Druckluftleitung (2) angeordnet ist, wobei in dem Bypasskanal (4) eine Aufnahme (18) für den Feuchtesensor ausgebildet ist, die mit der Druckluftleitung (2) in Verbindung steht.

2. Druckluftversorgungseinrichtung nach Anspruch 1, **dadurch gekennzeichnet, dass** der Bypasskanal (4) oberhalb der Druckluftleitung (2) angeordnet ist.

3. Druckluftversorgungseinrichtung nach einem der vorhergehenden Ansprüche, **dadurch gekennzeichnet, dass** der Bypasskanal (4) oder die Feuchtesensor-Aufnahme (18) über eine Kondensatablaufleitung (20) mit der Druckluftleitung (2) in Verbindung steht.

4. Druckluftversorgungseinrichtung nach einem der vorhergehenden Ansprüche, **dadurch gekennzeichnet, dass** die Feuchtesensoraufnahme (18) mit einem Heizelement zur Regenerierung des Feuchtesensors versehen ist.

5. Druckluftversorgungseinrichtung nach einem der vorhergehenden Ansprüche, **dadurch gekennzeichnet, dass** in der Druckluftleitung (2) zwischen einem Bypass-Einlass (6) und einem Bypass-Auslass (8) eine Leitungsverengung (22) zur Erzeugung eines Staudrucks vorhanden ist.

6. Druckluftversorgungseinrichtung nach einem der vorhergehenden Ansprüche, **dadurch gekennzeichnet, dass** in dem zum Feuchtesensor führenden Teil des Bypasskanals (4) eine Einrichtung zum Abfiltern von Verunreinigungen angeordnet ist.

7. Druckluftversorgungseinrichtung nach einem der vorhergehenden Ansprüche, **dadurch gekennzeichnet, dass** der Bypasskanal (4) so ausgebildet ist, dass die in den Bypasskanal (4) strömende Teilmenge der Druckluft Feuchtesensoraufnahme (18) turbulent durchströmt und damit den Feuchtesensor turbulent anströmt.

8. Druckluftversorgungseinrichtung nach einem der vorhergehenden Ansprüche, **dadurch gekennzeichnet, dass** die Feuchtesensoraufnahme (18) für eine senkrechte Aufnahme des Feuchtesensors ausgebildet ist.

9. Druckluftversorgungseinrichtung nach einem der vorhergehenden Ansprüche, **dadurch gekennzeichnet, dass** die Feuchtesensor-Aufnahme (18) durch eine durch den Bypasskanal (4) hindurch und über den Bypasskanal (4) hinaus sich erstreckende Ausnehmung gebildet ist.

10. Druckluftversorgungseinrichtung nach einem der vorhergehenden Ansprüche, **dadurch gekennzeichnet, dass** die Feuchtesensor-Aufnahme (18) von außen zugänglich ist.

11. Druckluftversorgungseinrichtung nach einem der vorhergehenden Ansprüche, **dadurch gekennzeichnet, dass** der Bypasskanal (4) und die Feuchtesensor-Aufnahme (18) im Lufttrockner, im Lufttrocknerauslass vor dem Mehrkreisschutzventil, in einem Verbraucherkreis des Mehrkreisschutzventils oder in einem separaten, in die Druckluftleitung (2) einsetzbaren Bauteil ausgebildet sind.

## Claims

1. Compressed air supply device for motor vehicles having a compressor, controller electronics, an air drier which has an inlet duct for non-dried compressed air, outlet duct for the dried compressed air, and a demoisturizing device through which compressed air to be dried can flow,
a pressure regulator with an outlet valve for controlling the compressor between a no-load phase and a load operating phase,
a multi-circuit protection valve which is connected to the outlet duct of the air drier via a compressed air line and has overflow valves for the individual circuits,
a regeneration valve, and
a moisture sensor for detecting the humidity of the compressed air flowing in the compressed air line, **characterized in that**
the moisture sensor is arranged in a bypass duct (4) of the compressed air line (2), wherein a receptacle (18) for the moisture sensor is formed in a bypass duct (4) and is connected to the compressed air line (2).

2. Compressed air supply device according to Claim 1, **characterized in that** the bypass duct (4) is arranged above the compressed air line (2).

3. Compressed air supply device according to one of the preceding claims, **characterized in that** the bypass duct (4) or the moisture sensor receptacle (18) are connected to the compressed air line (2) via a condensate discharge line (20).

4. Compressed air supply device according to one of the preceding claims, **characterized in that** the moisture sensor receptacle (18) is provided with a heating element for regenerating the moisture sensor.

5. Compressed air supply device according to one of the preceding claims, **characterized in that** a line constriction (22) for generating a ram pressure is present in the compressed air line (2), between a bypass inlet (6) and a bypass outlet (8).

6. Compressed air supply device according to one of the preceding claims, **characterized in that** a device for filtering impurities is arranged in the part of the bypass duct (4) leading to the moisture sensor.

7. Compressed air supply device according to one of the preceding claims, **characterized in that** the bypass duct (4) is embodied in such a way that the partial quantity of the compressed air flowing into the bypass duct (4) flows through the moisture sensor receptacle (18) in a turbulent fashion and therefore flows against the moisture sensor in a turbulent fashion.

8. Compressed air supply device according to one of the preceding claims, **characterized in that** the moisture sensor receptacle (18) is designed to hold the moisture sensor vertically.

9. Compressed air supply device according to one of the preceding claims, **characterized in that** the moisture sensor receptacle (18) is formed by a recess which extends through the bypass duct (4) and beyond the bypass duct (4).

10. Compressed air supply device according to one of the preceding claims, **characterized in that** the moisture sensor receptacle (18) is accessible from the outside.

11. Compressed air supply device according to one of the preceding claims, **characterized in that** the bypass duct (4) and the moisture sensor receptacle (18) are formed in the air drier, in the air drier outlet in front of the multi-circuit protection valve, in a consumer circuit of the multi-circuit protection valve or in a separate component which can be inserted into the compressed air line (2).

## Revendications

1. Dispositif d'alimentation en air comprimé pour véhicules automobiles, avec un compresseur, une électronique de commande, un sécheur d'air, qui présente un canal d'entrée pour l'air comprimé non séché, un canal de sortie pour l'air comprimé séché et un dispositif de déshumidification pouvant être traversé par l'air comprimé à sécher, avec un régulateur de pression avec une soupape de sortie pour la commande du compresseur entre une phase de marche au ralenti et une phase de marche en charge, avec une soupape de protection à plusieurs circuits, qui est raccordée au canal de sortie du sécheur d'air par une conduite d'air comprimé et qui présente des soupapes de décharge pour les circuits individuels, avec une soupape de régénération et avec un détecteur d'humidité pour déterminer l'humidité de l'air dans l'air comprimé circulant dans la conduite d'air comprimé, **caractérisé en ce que** le détecteur d'humidité est disposé dans un canal de dérivation (4) de la conduite d'air comprimé (2), un logement (18) pour le détecteur d'humidité étant formé dans le canal de dérivation (4) et étant en communication avec la conduite d'air comprimé (2).

2. Dispositif d'alimentation en air comprimé selon la revendication 1, **caractérisé en ce que** le canal de dérivation (4) est disposé au-dessus de la conduite d'air comprimé (2).

3. Dispositif d'alimentation en air comprimé selon l'une quelconque des revendications précédentes, **caractérisé en ce que** le canal de dérivation (4) ou le logement (18) du détecteur d'humidité est en communication avec la conduite d'air comprimé (2) par une conduite d'évacuation de condensat (20).

4. Dispositif d'alimentation en air comprimé selon l'une quelconque des revendications précédentes, **caractérisé en ce que** le logement (18) du détecteur d'humidité est doté d'un élément chauffant pour la régénération du détecteur d'humidité.

5. Dispositif d'alimentation en air comprimé selon l'une quelconque des revendications précédentes, **caractérisé en ce qu'**il se trouve dans la conduite d'air comprimé (2), entre une entrée de dérivation (6) et une sortie de dérivation (8), un étranglement (22) de la conduite pour produire une pression dynamique.

6. Dispositif d'alimentation en air comprimé selon l'une quelconque des revendications précédentes, **caractérisé en ce qu'**un dispositif de filtrage des impuretés est disposé dans la partie du canal de déviation (4) qui conduit au détecteur d'humidité.

7. Dispositif d'alimentation en air comprimé selon l'une quelconque des revendications précédentes, **caractérisé en ce que** le canal de dérivation (4) est réalisé de telle manière que la quantité partielle de l'air comprimé qui s'écoule dans le canal de dérivation (4) traverse avec turbulence le logement (18) du détecteur d'humidité et aborde dès lors avec turbulence le détecteur d'humidité.

8. Dispositif d'alimentation en air comprimé selon l'une quelconque des revendications précédentes, **caractérisé en ce que** le logement (18) du détecteur d'humidité est conçu pour un logement vertical du détecteur d'humidité.

9. Dispositif d'alimentation en air comprimé selon l'une quelconque des revendications précédentes, **caractérisé en ce que** le logement (18) du détecteur d'humidité est formé par un évidement s'étendant à travers le canal de dérivation (4) et au-delà du canal de dérivation (4).

10. Dispositif d'alimentation en air comprimé selon l'une quelconque des revendications précédentes, **caractérisé en ce que** le logement (18) du détecteur d'humidité est accessible de l'extérieur.

11. Dispositif d'alimentation en air comprimé selon l'une quelconque des revendications précédentes, **caractérisé en ce que** le canal de dérivation (4) et le logement (18) du détecteur d'humidité sont disposés dans le sécheur d'air, dans la sortie du sécheur d'air avant la soupape de protection à plusieurs circuits, dans un circuit de consommateur de la soupape de protection à plusieurs circuits ou dans un composant séparé pouvant être introduit dans la conduite d'air comprimé (2).
